# EUROPEAN PATENT APPLICATION

(11) **EP 4 488 024 A1**
(43) Date of publication of application: **08.01.2025**
(21) Application number: 23184031.5
(22) Date of filing: 07.07.2023
(51) Int. Cl.: B29C 43/00, B29C 43/14, B29C 43/52, B29C 51/00, B29C 51/02, B29C 51/08, B29C 51/42, B60R 13/08, B29K 105/04, B29K 105/06, B29K 105/26, B29L 31/30

(54) **METHOD TO MANUFACTURE A SHAPED HIGH-DENSITY FOAM FLAKE COMPOSITE PRODUCT AND THREE-DIMENSIONALLY SHAPED SOUND ABSORPTION MEMBER**

(71) Applicant: Carpenter Engineered Foams Belgium BV, 1831 Machelen (BE)
(72) Inventor: BRACKE, Kristiaan, 1130 Brussel (BE); DE THAEY, Rob, 1130 Brussel (BE); GONTIER, Mathieu, 1130 Brussel (BE)
(74) Representative: Reekmans, Sara Maria

(57) **Abstract**

The invention relates to a method to manufacture a shaped high-density foam flake composite product 10, said product 10 comprising foam flakes 2 and a thermoplastic binding agent 3 bonding the foam flakes 2, with the following steps:
(i) Compressing at least one section of a low-density foam flake composite sheet having a first sheet thickness as a starting product 1, the starting product having 1 a temperature or having been brought to a temperature to have at least a sufficient portion of the binding agent 3 in a molten state, such that due to the compression force applied to the starting product 1 molten binding agent 3 is pressed into surface cavities of the foam flakes 2, by which compressing step the at least one section of the starting product 1 is compressed to a second thickness, said second thickness being a reduced thickness compared to the first thickness and thus having a higher density than the starting product 1, and letting the compressed starting product cool to a temperature below the melting temperature of the binding agent 3, therewith having obtained a foam flake composite semi-finished sheet product 7 with at least one high-density section,
(ii) heating said semi-finished sheet product 7 obtained with step i to a temperature so that binding agent 3, bonding adjacent foam flakes 2, is brought into a molten state and thermoforming the heated semi-finished sheet product 7 in a mould 8 into the desired shape and letting it cool below the melting temperature of the binding agent 3, thereafter opening the mould 8 and demoulding the shaped foam flake composite product 10 with its at least one high-density section.

## Description

The invention relates to a method to manufacture a shaped high-density foam flake composite product.

Foam flake composite sheets are manufactured by mixing foam flakes with a thermoplastic binding agent, by arranging this material as a layer, typically air laid, and then heating this layer to a temperature so that the binding agent is brought into its molten state to bond the foam flakes to each other, after which the sheet is consolidated. The foam flakes to manufacture a foam flake composite sheet are typically recycled for example from post-consumer foam waste such as end-of-life upholstery or mattresses, or from post-industry waste. Alternatively, or in combination with recycled foam flakes, also juvenile foam flakes may be used. The density of such foam flake composite sheet is typically in the range of 20-150 kg/m³. The obtained density is mainly defined by the mean density of the used foam flakes, by the amount of binding agent and by the degree of compression during the consolidation step.

The binding agent used is typically a thermoplastic binding agent, which may be provided in the typically air-laid sheet in the form of a granulate or powder and/or melt fibres. Melt fibres have a needle-like elongated shape. To manufacture such foam flake composite sheets also bi-component fibres are used. These have a core and a melt fibre shell, whereas the melt fibre shell has a lower melting temperature than the core. In order to bond the foam flakes to each other when using such bi-component fibres, only the melt fibre shell is brought into its molten state.

For some applications of such foam flake composite sheets, a high density sheet with a three-dimensional shape is required. This is typically carried out in a thermocompression mould allowing compression and shaping of such foam flake composite sheet in one step. One problem in forming such three-dimensional high density foam flake composite sheet is the requirement, that the sheet needs to be heated up to a temperature in which the binding agent is molten, in order to conform the sheet to the mould geometry and to carry out the thermocompression process. Due to the inhomogeneity of such foam flake composite sheet, it is not easy to provide a homogeneously heated foam flake composite sheet, which is then to be introduced into such thermocompression mould. Only if such sheet to be thermocom-pressed is heated into the core up to a temperature that the binding agent is molten, the thermocompression process to bring the flat sheet into its desired high density and three-dimensional shape can be carried out. However, the heated foam flake composite sheet is susceptible to tearing during such thermocompression process. Such tearing or rupturing, respectively, is not acceptable due to the irregularities in the surface of the shaped product. Due to these drawbacks foam flake composite sheets can only be brought into rather simple three-dimensional shapes at relatively low densities. These are shapes, which can be formed without needing to apply higher tensile stress to the foam flake composite sheet. It is therefore not possible to provide such foam flake composite sheet with a rather complex three-dimensional shape.

FR 3 130 681 A1 discloses a method for producing a low-density foam flake composite product. This low-density foam flake composite product can be used to provide a sound absorbing member according to the mass-spring-system, if such low-density foam flake composite product is bonded to a mass layer. The product obtained by the method disclosed in this prior art document is the spring-layer of such mass-spring-system. Such low-density foam flake composite product is manufactured by placing the mixture of foam flakes and binding agent into a mould having a cavity of different thicknesses, such that after applying heat to melt the binding agent in order to bond the foam flakes to each other, the product achieved has sections of a lower and a higher thickness. With this method the foam flake composite product is shaped as to its thickness in the manufacturing process to provide the low-density foam flake composite product. The binding agent used according to this method are bi-component fibres. This prior art method does not disclose how to manufacture a high-density foam flake composite product, which is three-dimensionally shaped in its extension defined by its main surface sides.

A similar method is disclosed in FR 3 114 263 A1. According to the method disclosed in this prior art document in the mould two foam flake melt fibre mixtures are arranged on top of each other. Both layers are separated by an air sealing intermediate layer. Heat is introduced into the closed mould in order to melt the binding agent and bond the foam flakes together. Also in this prior art document melt fibres are used as binding agent. After cooling this layered product in certain sections of the mould, a vacuum is drawn in order to allow compression of the lower layer thereby locally increasing its density. In a second step the top layer is heated in the area of the compressed lower layer, which then expands so that at the end of the process a layered sheet of constant thickness is achieved. Also this prior art does not disclose how to manufacture a three-dimensionally shaped high-density foam flake composite product.

In view of these drawbacks the technical problem to be solved by the invention disclosed is to provide a method, with which three-dimensionally shaped foam flake composite sheets of higher density can be manufactured without encountering the drawbacks sketched out above.

This technical problem is solved by a method with the method steps of claim 1.

When referring to the extension of a sheet product or a shaped product, the word "extension" is defined as follows: The x- and y-extension define the extension of such product according to its main surface sides, for example its flat faces. The z-extension is the extension in the direction of the thickness of such sheet or product. For the three-dimensionally shaped product the same system is applied. The three-dimensional shape is a shape applied mostly in z-direction.

According to this method the shaped high-density foam flake composite product is manufactured in two steps. By way of the first step a low-density foam flake composite sheet as starting product is compressed in order to increase its density. This step of compression is carried out at a temperature, in which the binding agent or at least the majority of it is in its molten state. The compression applied to the flat sides, defining the extension of the starting product (its extension in the x-y-plane), leads to a compression of the foam flakes (compression in z-direction) and typically also to a movement between foam flake boundaries. The compression force applied is also active on the thermoplastic binder between the foam flakes. Due to this and an inter-foam flake movement molten binding agent is pressed into surface cavities of the foam flakes. This may reduce the thickness of binding agent between two adjacent foam flakes. This compression step is finalized with consolidating the compressed material by cooling, which then remains in its compressed state. By this first step of the manufacturing method (step (i)), the density of the starting product is increased. Typically, density is increased by a factor of at least 3. The degree of compression is dependent on the later use of the final product. Typically, the density of the starting product will be increased five to ten times or even more. It is within the range of the claimed invention, that the compression step is carried out on the complete surface of the starting product, but also to only a section thereof.

At the end of this first step (i) a semi-finished sheet product which is compressed in its z-direction in at least a section thereof, is provided. Step (i) allows to obtain such sheet product in almost any required density being higher than the density of the starting product without needing to manufacture such product with foam flakes having the density needed for the sheet product. Another major benefit of this compressing step is, that the surfaces of the semi-finished sheet product, being in contact with the pressing tool, are very smooth. Such smooth surface of the semi-finished sheet product is in particular of benefit for conducting the second step (step (ii)) of the manufacturing process.

As already sketched out, during the compression step, the constituents of the starting product are rearranged to each other and binding agent is brought into surface cavities of the foam flakes. This improved interconnection of the foam flakes combined with a smooth surface, which is basically provided by binding agent brought to the surface due to the compression of step (i) is responsible that this semi-finished sheet product is resistive to tensile stress acting on the surface of the semi-finished sheet product when being thermoformed into its desired three-dimensional shape in a mould during step (ii).

Due to this resistivity, thermoforming of the semi-finished sheet product into complex three-dimensional shapes, including small radii and angled segments is enabled, without tearing problems.

Prior to conducting the thermoforming step (ii), the semi-finished sheet product is heated in order to bring binding agent into its molten state. This is typically carried out outside of the thermoforming mould. Having carried out step (i) prior to such heating step also gives a benefit for such heating. Heating such semi-finished product is a lot easier and a lot quicker than heating an uncompressed foam flake composite material. The ground for this is that by the compression step (i) the volume (its thickness) of the starting product is significantly reduced. By this the thermal insulation properties of a low-density foam flake composite sheet are significantly reduced. Heating such high-density foam flake composite material as semi-finished product up to the core is also a lot more reliable due to a homogenization of the material making up the semi-finished sheet product. Due to these properties of the semi-finished sheet product, through and through heating of it can be carried out even with only a heat source from one side of the sheet product. This facilitates the manufacturing process. Further, the heat can be provided by an infrared heat source and still bring the semi-finished sheet product throughout its thickness to a temperature to melt the binding agent.

In the step of heating the semi-finished sheet product it was encountered, that this does not increase its thickness, which means, that the density set by step (i) remains unchanged although the semi-finished sheet product is heated up again. Here the effect is used, that the recovery force introduced into the foam flakes due to the compression is sufficiently lower than the cohesive force of the binding agent, avoiding such expansion. This facilitates handling of the heated semi-finished sheet product.

After thermoforming the heated semi-finished product in the mould into its desired shape, the shaped foam flake composite product remains within the mould until the binding agent has consolidated. Then the mould is opened and the shaped high-density foam flake composite product is demoulded. Also due to the smooth surface of the semi-finished sheet product, typically no demoulding agents or mechanical demoulding aids are needed, in order to demould the shaped foam flake composite product with its at least one high-density section.

The foam flakes used to provide the starting product could be comminuted residues from open-cell or mix-cell foams. These residues may be obtained by recycling end-of-life foam products, including flexible, semi-rigid or even rigid foam. Preferably open-cell flexible foam flakes, preferably from polyurethane, are used for this manufacturing method. Of course, it is possible to use mixed types of foam flakes, depending on the intended use of the shaped foam flake composite product. Should this for example be intended to be a part of a sound absorption system, then melamine foam flakes may be introduced into the foam flake mixture, since these foam flakes have good sound absorption properties. The typical size of such foam flakes is between 2 mm and 40 mm and have a density of 10 to 70 kg/m³.

During step (ii) the semi-finished sheet product is shaped in such a manner, that it is bent in order to bring it into a three-dimensional shape. Shaping is carried out in the z-direction of the semi-finished sheet product.

The thermoplastic binding agent is selected from a thermoplastic granulate or powder, or melt fibres, or a mixture thereof. Preferably melt fibres are used to provide at least part of the binding agent, if not all of it. In a preferred embodiment the melt fibres are bi-component fibres. The benefit of melt fibres is that these will be aligned more or less in a transverse direction to the direction of compressing the starting product. Due to these fibres and their longitudinal extension within the foam flakes during the compression step, the semi-finished sheet product, when heated to conduct the thermoforming step, is capable of withstanding even higher tensile stresses.

In order to influence mechanical or other properties of the foam flake composite product with its at least one high-density section, other fibres (besides melt fibres) or a mixture of fibres may be added to the mixture comprising the foam flakes and the thermoplastic binding agent to manufacture the starting product. Structural fibers (such as glass fibers, aramide fibers, carbon fibers, metal fibers) may be added to reinforce. Textile fibers (pref. recycled) or natural fibers (such as kenaf, wood, hemp, coconut, cork, cane, carboard, wool) may be added, as well as acoustic fibers (such as PET fibers of dtex 1.5-2). Further, additives may be added to introduce functional properties to the foam flake composite product (such as fire retardants, biocidal agents, heavy fillers and others).

This high-density foam flake composite product can be used by itself or it may be used as a base substrate to apply an additional layer on at least one of its surfaces extending basically in the x-y-plane. This additional layer could for example be a low-density foam flake composite sheet, which is bonded to one of the faces extending in the x-y-plane of the high-density foam flake composite product. Such layered foam flake composite product with significantly different densities in its layers can be used as a mass spring noise absorbing member, which in contrast to prior art noise absorbing members is three-dimensionally shaped. This, of course, is only one of numerous possible applications for the use of the product manufactured with the claimed method.

In case the shaped foam flake composite product with its at least one high-density section is to be used as a base substrate in order to bond an additional layer to one of its surfaces defining its extension extending in the x-y-plane, in a preferred embodiment the binding agent within the starting product is distributed in a graded manner. This means, that the surface of the starting product extending in the x-y-plane, to which an additional layer shall be bonded, has a higher amount of binding agent compared to other sections of the thickness of the starting product. In case on both these opposing surfaces of the starting product an additional layer shall be bonded, then on and near to the surface of both surfaces it is preferred to have an increased amount of binding agent. This enhances the bonding action between the high-density foam flake composite product and such additional layer, without the need of having such amount of binding agent uniformly throughout the thickness of the starting product, which could be a cost saving. Principally such additional layer could be of any kind. In a preferred embodiment the additional layer is selected from one of a low-density foam flake composite sheet, an acoustic non-woven sheet or a deco layer.

The step of bonding an additional layer to the base substrate can be carried out at or during different steps of the manufacturing process. This can be carried out in the compression step (step (i)), in the thermoforming step (step (ii)), between these two steps or following the thermoforming step (step(ii)). Carrying out this bonding step to bond one additional layer to one of the surfaces of the base substrate extending in the x-y-plane during step (i) or in (ii) has the benefit, that then the heat already applied to the base substrate can be used so that no additional heating step needs to be applied, and so that no additional bonding layers (adhesive webs) need to be applied to bond the additional layer to the base substrate. In case an additional heating step shall be applied, then it is only necessary to heat up the base substrate superficially and not all the way through and through. In case an additional layer shall be bonded on both opposing surfaces of the base product, then both layers can be bonded to the base substrate during the same manufacturing step or also at different manufacturing steps.

In a preferred embodiment of the claimed method the starting product is heated in the tool used for compressing the starting product in step (i). This means, that the press used has heated pressing plates. It is also possible that, even when using heated press plates, the starting product can be heated or is still heated by a preceding manufacturing step prior to introducing it into the press for the compression step (i), even if such heating is not carried out to be a heating all the way through to the core. Step (i) can be carried out batchwise or in-line with the manufacturing line to manufacture the starting product. In case the compression step is carried out in-line with the manufacturing process to manufacture the starting product, the compression can be carried out by using one or double belt inline compression machinery.

In a preferred embodiment the thermoforming step (step ii) is carried out in a mould having a temperature on its surfaces contacting the semi-finished sheet product being lower than the melting temperature of the binding agent. Such temperature is typically in the range of 20°C to 95°C and more preferred between 25°C to 65°C. The effect, that the semi-finished sheet product having a temperature so that the binding agent is molten, is that when this heated semi-finished sheet product is placed into the mould, as soon as its surface contacts the mould surface, the superficial binding agent consolidates, but due to the heat within the semi-finished sheet product, this product stays soft enough for being thermoformed. This as an additional measure ensures that the surfaces of the semi-finished sheet product to be brought into its three-dimensional shape can withstand a rather high tensile stress without tearing.

In case the shaped foam flake composite product with its at least one high-density section shall have different densities over its extension, then the compression according to step (i) may be carried out being non-uniform over its surface extending in the x-y-plane.

A further increase in density can also be applied to the semi-finished sheet product during the thermoforming step (step (ii)). The increase in density, if additionally provided by this step, will be significantly lower than applied in the compression step of step (i). An additional compression in step (ii) can be applied, if in certain sections of the final product the thickness of the final product shall be different from each other, typically for adjustment to the vicinity, to where the final product shall be mounted.

By way of an example the initial thickness of the starting product may be in the range from 5 to 200 mm with an initial density of 20 to 150 kg/m³. The target thickness of the semi-finished sheet product is typically in the range of 2 to 5 mm with a density of 600 to 900 kg/m³. The increase in density is significant. Therefore, the final product manufactured with this method can well be used as part of an acoustic damping system (sound absorption system) according to the mass-spring-system, in which this product is the mass-layer. The spring-layer could well be a foam flake composite sheet product applied thereto as an additional layer as sketched out above.

In an embodiment, in which an additional layer is bonded to the foam flake composite product with its at least one high-density section, this step can be used to integrate into the interface between the base substrate and the additional layer any other element needed in the final product. This may for example be one or more sensors for sensing for example temperature, vibrations, tension or the like. Then no further bonding steps are required to implement these functional elements into the final product.

Also sustainability is met with this method, simply because the major portion in volume of the final product, in particular the foam flakes, can be provided as recycling products, thus having been derived from other end-of-life products.

According to one preferred embodiment this method may be used to provide in an easy and cost-effective manner a three-dimensionally shaped sound absorption member of the mass-spring-type. The shape of such sound absorption member is for example adapted to the geometry of the inside body of parts of a vehicle, for example the hood, the door or any other part.

In the following by way of an example a specific embodiment will be presented with reference to the figures. These show:
- **Fig. 1:**: A foam flake composite sheet as starting product heated inserted into a press prior to compressing the sheet product,
- **Fig. 2:**: an enlarged section of the foam flake composite sheet product of figure 1 schematically depicting foam flakes bonded by binding agent,
- **Fig. 3:**: the semi-finished sheet product at the end of the compression step still resting in the closed press of figure 1,
- **Fig. 4:**: the enlarged section of the starting product of figure 2 in its com-pressed state, whereas the compression is only schematically shown,
- **Fig. 5:**: the semi-finished sheet product under heat exposure on one of its flat sides defining its extension,
- **Fig. 6:**: the heated semi-finished sheet product to be inserted into a mould for three-dimensionally thermoforming the heated semi-finished product,
- **Fig. 7:**: the closed mould with the three-dimensionally shaped high-density foam flake composite product and

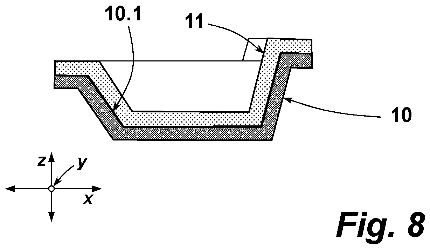

- **Fig. 8:**: the high-density foam flake composite product with a low-density composite sheet bonded to one of its side faces providing together a noise absorption member.

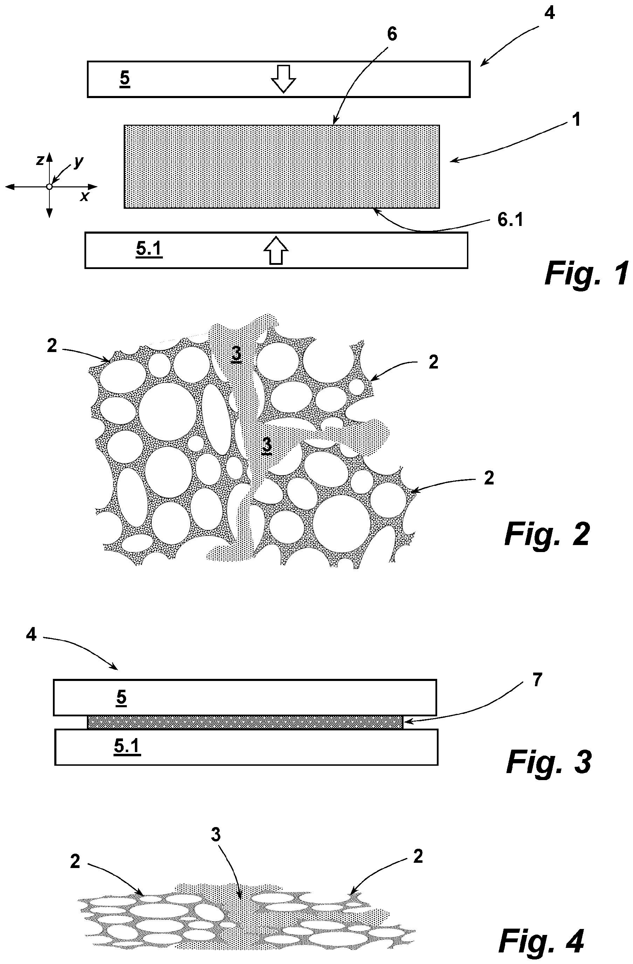

To manufacture a three-dimensionally shaped high-density foam flake composite product a low-density foam flake composite sheet product is used as starting product 1. The starting product 1 is made up of foam flakes 2 (see figure 2), which are bonded to each other by a binding agent 3. The binding agent 3 has thermoplastic properties, which means, that the binding agent 3 can be re-heated several times to its melting temperature and consolidated by cooling. In the material mix to provide the starting product 1 in the depicted embodiment the binding agent is provided by bi-component fibres, of which the outer shell resembles the thermoplastic binding agent. To manufacture the starting product 1 the material mix has been heated to a temperature so that the binding agent melts and thereby bonds the foam flakes 2 to each other. In Figure 2 the core of the bi-component fibres is not depicted.

In a first step of the manufacturing method, the starting product is introduced into a press 4, comprising two press tools 5, 5.1. The press tools are arranged on the sides of the surfaces 6, 6.1 of the starting product extending in the x-y-plane. The press tools 5, 5.1 can be moved in the direction towards each other and thereby compress the starting product 1. In the depicted embodiment the press tools 5, 5.1 are heated in order to melt the binding agent 3 within the starting product 1. In another embodiment the starting product is introduced into the press whilst already having the necessary temperature so that the binding agent is molten. In still another embodiment the starting product is introduced into the press pre-heated below its melting temperature and that in such press also the press tools are heated in order to increase the temperature to melt the binding agent.

In the first manufacturing step - step (i) - the starting product 1 with its molten binding agent 3 is compressed in order to increase its density. The thickness of the starting product 1 is reduced significantly, as schematically depicted and to be seen in a comparison between figures 1 and 3. The compressed starting product, which is the high-density foam flake composite semi-finished sheet product 7, remains within the closed press 4 for about about 2-10 minutes. Then the press 4 is opened and the semi-finished sheet product 7 is removed. The heated press tools stay heated. The semi-finished sheet product 7 is removed while still being hot.

Figure 4 shows an enlarged section of the semi-finished sheet product 7. Due to the compression not only the pores but also the pore membranes defining the skeletal structure of the foam flakes 2 enclosing the pores are depicted to be compressed. In fact, only the pore volume is reduced significantly by compressing these, not the thickness of the pore membranes. By reducing the thickness of the starting product 1, the density is increased. In reality the density of the semi-finished sheet product 7 is a lot higher than the impression of Figure4 seems to show.

In the starting product 1 as to be schematically seen in Figure 2, the binding agent 3 extends between the foam flakes 2 bonding these to each other. Due to the compression step carried out, the binding agent 3 is pressed into surface cavities of the foam flakes 2 as schematically depicted in Figure 4. Movements between foam flakes 2 promote that binding agent 3 is introduced into such cavities. Since in the depicted embodiment the foam flakes 2 are open-cell flexible foam flakes, binding agent 3 may also be pressed into pores, which are in contact to surface cavities. The foam flakes 2 are thus interlinked by the binding agent 3 a lot better and more thoroughly. Further, due to the compression, binding agent 3 is also pressed out of the starting product 1 in the direction to its surfaces contacting the press tools 5, 5.1. This is responsible that these surfaces 6, 6.1 of the semi-finished sheet product 7 are very smooth.

Heating of the starting product 1 during this compression step by the press tools 5, 5.1 has the further advantage, that heating the starting product 1 and closing the press 4 may be carried out simultaneously. It is not necessary that the compression step is only then started, when the starting product 1 has been heated through and through. The heated press tools 5, 5.1 bring their heat with increasing compression deeper and deeper into the starting product 1, whereas the outer sections in respect of its thickness are already molten.

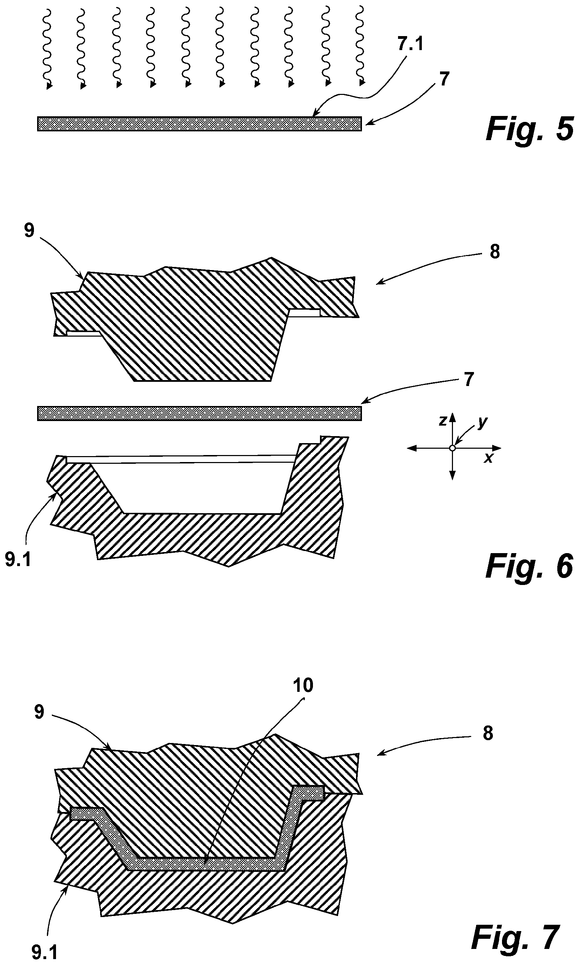

In a second manufacturing step - step (ii) - the semi-finished sheet product 7 is subjected to a thermoforming process. In a first step to conduct the thermoforming step, the semi-finished sheet product 7 is heated by IR-heating means as depicted in Figure 5. In the depicted embodiment, surface 7.1 (extending in the x-y-plane) of the semi-finished sheet product 7 is heated. Due to the reduced thickness and the significant reduction of pore volume of the semi-finished sheet product 7 compared to the starting product 1, heating can be carried out from one side of the semi-finished sheet product only and still achieve in a short time a through and through heating to a temperature so that the binding agent 3 melts. Then the heated semi-finished sheet product 7 is introduced into a mould 8 (see Figure 6) depicting the mould 8 with its two mould parts 9, 9.1. The mould 8 is then closed to thermoform the semi-finished sheet product 7 by pressing it into the mould cavity. The mould parts 9, 9.1 are kept at a temperature well below the melting temperature of the binding agent 3. In the depicted embodiment the mould parts 9, 9.1 are kept at a temperature of 45°C to 50°C.

After the mould 8 has been completely closed, the thermoforming process is finished. The thermoformed semi-finished sheet product remains within the mould 8, until the shaped product 10 has cooled to a temperature well below the melting temperature of the binding agent 3. Then the three-dimensionally shaped high-density foam flake composite product 10 is demoulded. Due to the smooth surface of the semi-finished sheet product 7 no demoulding agent is needed in order to remove the shaped foam flake composite product 10 from the mould parts 9, 9.1.

In the depicted embodiment, a low-density composite foam flake sheet 11 is bonded as an additional layer on the surface 10.1 extending in the x-y-plane of the product 10. This is carried out by heating the surface 10.1 of the shaped foam flake composite product 10, to which the additional layer, here: the low-density composite foam flake sheet 11 is to be bonded. The superficial binding agent in the shaped foam flake composite product 10 is used as binding agent to bond the additional layer 11. A bonding force basically in z-direction is applied in order to increase adhesion strength between these two layers 10, 11. Since in the depicted embodiment the additional layer is low-density composite foam flake sheet 11 the compression force will be typically higher than applying such force, if a non-compressive additional layer is to be bonded to such surface of the three-dimensionally shaped foam flake composite product. The shaped high-density foam flake composite product 10 is the substrate, on which the additional layer is applied to. In the depicted embodiment the additional layer 11 is applied to the substrate after having provided the shaped high-density foam flake composite product 10. This layered product with the shaped high-density foam flake composite product 10 and the additional layer 11 is used as a sound absorption member of the mass-spring type.

Preferably the low-density composite foam flake sheet 11 has at least one zone of local higher compression, in order to improve the bonding strength when bonding it to one of the surfaces of the three-dimensionally shaped foam flake composite product 10.

It will be evident for a person of skill in the art, that the method disclosed can be used to manufacture a wide variety of high-density foam flake composite products. Further, it is evident, that variations to the method steps described may be carried out without deviating from the teachings of the claims.

### Reference numerals

- 1: Starting product
- 2: Foam flakes
- 3: Binding agent
- 4: Press
- 5, 5.1: Press tool
- 6, 6.1: Surface of starting product
- 7: Semi-finished sheet product
- 7.1: Surface of semi-finished sheet product
- 8: Mould
- 9, 9.1: Mould parts
- 10: Product
- 10.1: Surface of shaped high-density foam flake composite product
- 11: Low-density foam flake sheet product / additional layer

## Claims

1. Method to manufacture a shaped high-density foam flake composite product (10), said product (10) comprising foam flakes (2) and a thermoplastic binding agent (3) bonding the foam flakes (2), with the following steps:
(i) Compressing at least one section of a low-density foam flake composite sheet having a first sheet thickness as a starting product (1), the starting product having (1) a temperature or having been brought to a temperature to have at least a sufficient portion of the binding agent (3) in a molten state, such that due to the compression force applied to the starting product (1) molten binding agent (3) is pressed into surface cavities of the foam flakes (2), by which compressing step the at least one section of the starting product (1) is compressed to a second thickness, said second thickness being a reduced thickness compared to the first thickness and thus having a higher density than the starting product (1), and letting the compressed starting product cool to a temperature below the melting temperature of the binding agent (3), therewith having obtained a foam flake composite semi-finished sheet product (7) with at least one high-density section,
(ii) heating said semi-finished sheet product (7) obtained with step (i) to a temperature so that binding agent (3), bonding adjacent foam flakes (2), is brought into a molten state and thermoforming the heated semi-finished sheet product (7) in a mould (8) into the desired shape and letting it cool below the melting temperature of the binding agent (3), thereafter opening the mould (8) and demoulding the shaped foam flake composite product (10) with its at least one high-density section.

2. Method according to claim 1, **characterized in that** in step (i) in the at least one section the density of the starting product (1) is increased at least to be three times in order to obtain the density of the semi-finished product (7).

3. Method according to claim 1 or 2, **characterized in that** in step (i) the starting product (1) is compressed uniformly over its surface (6, 6.1) extending in the x-y-plane.

4. Method according to any claim 1 or 3, **characterized in that** the starting product (1) is heated in the press (4) used for compressing the starting product (1), said heating being applied to the starting product (1) prior and/or during the compression step.

5. Method according to any of the preceding claims, **characterized in that** step (i) is carried out in a continuous process following the step of manufacturing the starting product (1).

6. Method according to claim 5, **characterized in that** the molten state of the binding agent for compression step (i) is the result from the manufacturing step to provide the starting product and that the starting product is introduced into step (i) whilst already having the requested temperature.

7. Method according to any of the preceding claims, **characterized in that** in step (ii) the semi-finished sheet product (1) is heated prior to inserting it into the mould (8) for the thermoforming process.

8. Method according to claim 7, **characterized in that** the semi-finished sheet product (7) is heated by infrared heating means.

9. Method according to claim 8, **characterized in that** the semi-finished sheet product (7) is heated by the infrared heating means only from one of its surfaces (7.1) extending in the x-y-plane, which heating is carried out so that the semi-finished sheet product (7) is heated through and through to the temperature required to conduct step (ii).

10. Method according to any of claims 1 to 9, **characterized in that** the thermoforming process of step (ii) is carried out in a mould (8) having a temperature below the melting temperature of the binding agent (3).

11. Method according to claim 10, **characterized in that** the step of thermoforming the pre-heated semi-finished sheet product (7) is carried out in a mould (8) having a temperature on its surface contacting the semi-finished sheet product within the temperature range of 20°C to 95°C.

12. Method according to any of the preceding claims, **characterized in that** the compression applied to the starting product (1) according to step (i) is carried out as being non-uniform over surface of the starting product (1) extending in the x-y-plane, obtaining a semi-finished sheet product with at least two sections of different density.

13. Method according to any of the preceding claims, **characterized in that** during step (ii) the semi-finished sheet product (7) is also compressed, whereas the degree of compression carried out in step (ii) is significantly lower than the compression in step (i).

14. Method according to any of the preceding claims, **characterized in that** the starting product (1), the semi-finished sheet product (7) or the shaped high-density foam flake composite product (10) is used as a base substrate to apply on at least one of its surfaces extending in the x-y-plane at least one additional layer 11), by bonding said layer (11) to the starting product (1), the semi-finished sheet product (7) or the shaped high-density foam flake composite product (10) using the superficial binding agent (3) of the base substrate, being heated to its melting temperature and cooling the layered product comprising the base substrate and the at least one additional layer (11) while the additional layer (11) is in contact with a flat side defining the extension of the sheet of the base substrate.

15. Method according to claim 14, **characterized in that** the binding agent (3) is distributed in the starting product in a graded manner, such that the ratio of binding agent to foam flakes at and close to at least one of the surfaces extending in the x-y-plane of the starting product (1) is higher than in other sections of the thickness of the starting product and that an additional layer is bonded to this surface (10.1) of the starting product (1), the semi-finished sheet product (7) or the product (10) obtained by step (ii).

16. Method according to claim 14 or 15, **characterized in that** the step of bonding at least one additional layer (11) to the base substrate is carried out in step (i) and/or in step (ii), and/or between step (i) and step (ii), and/or as a step following step (ii).

17. Method according to one of claims 14 to 16, **characterized in that** the at least on one additional layer (11) bonded to the shaped product is selected from one of a low-density foam flake composite sheet, an acoustic non-woven sheet or a deco-layer.

18. Method according to any of the preceding claims, **characterized in that** in the starting product (1) the binding agent (3) comprises one of the following types or a combination thereof: a thermoplastic granulate or powder, thermoplastic melt fibres or a melt fibre mixture.

19. Method according to claim 17, **characterized in that** the melt fibres used to manufacture the starting product (1) are at least partially bi-component fibres with a core and a thermoplastic melt fibre shell, whereas the core consists of a material with a higher melting temperature than the material of the fibre shell.

20. Method according to any of the proceedings claims, **characterized in that** the starting product comprises additional non-melting fibres or a non-melting fibre mixture.

21. Three-dimensionally shaped sound absorption member of the mass-spring-type comprising a first layer having a higher density being the mass layer and a second layer having a lower density being the spring layer, wherein both layers are provided as foam flake composite layers and wherein the layer with the higher density has been manufactured according to one of claims 1 to 20.
